(19) Europäisches Patentamt
European Patent Office
Office européen des brevets

(11) **EP 2 498 128 A1**

(12) **EUROPEAN PATENT APPLICATION**

(43) Date of publication:
**12.09.2012 Bulletin 2012/37**

(51) Int Cl.:
*G03B 21/00* (2006.01)   *G06F 3/14* (2006.01)
*G09G 3/00* (2006.01)

(21) Application number: **12154180.9**

(22) Date of filing: **07.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.03.2011 JP 2011052337**

(71) Applicant: **Hitachi Ltd.**
**Tokyo (JP)**

(72) Inventors:
• **Hirayama, Hirokazu**
  **Chiyoda-ku, Tokyo 100-8280 (JP)**

• **Nakasugi, Takashi**
  **Chiyoda-ku, Tokyo 100-8280 (JP)**
• **Morioka, Takayuki**
  **Chiyoda-ku, Tokyo 100-8280 (JP)**
• **Ikeshoji, Nobuo**
  **Chiyoda-ku, Tokyo 100-8280 (JP)**

(74) Representative: **Moore, Graeme Patrick**
**Mewburn Ellis LLP**
**33 Gutter Lane**
**London EC2V 8AS (GB)**

(54) **Data display method and data display system**

(57) The coordinate system of the electronic data 112 to be projected on the touch panel 120, and the coordinate system of the two-dimensional object 130 similar to the electronic data pasted, printed etc. on the touch panel 120 0 to which the electronic data is to be projected, are associated by an alignment instruction from a user to the touch panel to specify the position of electronic data corresponding to the specified position indicated to the touch panel and to specify related data linked to the specified position. Outputting this related data is also an aspect of the present invention. Further, outputting this output to an output device different from the touch panel and displaying and the like with this output device is also an aspect of the present invention.

START

PRESS F5 KEY TO ENTER ADJUSTMENT MODE AND PICTURE PROJECTED 201

PROJECTED PICTURE PORTION IS :
MOVED WITH ↑ ↓ ← → KEYS
SCALE UP/DN WITH PAGE UP AND PAGE DOWN KEYS
TRANSFORMED WITH TEN KEYS 202

PROJECTED PICTURE PORTION OVERLAPS ACTUAL PICTURE? 203 — NO

YES

TOUCH SPECIFIC LOCATION OF ACTUAL PICTURE 204

RECORD AMOUNT OF SCALE UP/DN, MOVEMENT, TRANSFORMATION OF PICTURE PORTION 205

RECORD AMOUNT OF DISPLACEMENT IN COORDINATES BETWEEN ACTUAL PICTURE AND TOUCH POSITION 206

PRESS F5 KEY TO LEAVE ADJUSTMENT MODE AND PROJECTED PICTURE CLEARED 207

END

FIG. 2

EP 2 498 128 A1

**Description**

CROSS-REFERENCE TO RELATED APPLICATIONS

The present application claims the benefit of priority to Japanese Patent Application No. 2011-052337, filed on March 10, 2011, of which full contents are incorporated herein by reference.

BACKGROUND OF THE INVENTION

Field of the Invention

The present invention relates to a technology for displaying electronic data effectively. In particular, the invention relates to a technology for controlling the display position in response to an operation by a user.

Description of the Related Art

Displaying data has been conventionally made using projectors and the like. In such cases, information relating to the displayed contents is displayed according to the specification by a user. As an example of the above, a picture is displayed and its caption may also be displayed, or a map is displayed and information of the shops included in the map may also be displayed. For example, Japanese Patent Application Laid-open Publication No. 2003-167880 discloses specifying a shop on a map and displaying therewith sales and the like of the shop as map information.

However, the invention in the above publication merely displays map information (related data) and does not take into account how an image is to be displayed appropriately for the user. For example, points such as how the image can be displayed in an appropriate position (alignment of display) or how to make the display more appealing are not taken into consideration.

With regard to displaying, examination on a touch input display system including a touch panel and projecting with projectors and the like was made to reveal that in a case a two-dimensional object such as a picture of an arbitrary size is pasted to a blackboard or the like for the user to touch the two-dimensional object with his/her finger and the like to operate the projected content by aligning positions of the projection, the input and the two-dimensional object, the following methods for alignment are possible. The first method is, synchronizing the coordinates of the input and the two-dimensional object by setting the size of the two dimensional object and the pasting position to a size fit to the projected content and not to an arbitrary position while leaving the projected content as it is. The second method is, adapting the size and position of the projected content to those of the two-dimensional object by scaling up/down the projected content using projection means such as a projector, and adjusting the position, and aligning the coordinates of the input with the coordinates of the two-dimensional object by readjusting the coordinates of the projection and the input. However, in the former case, the degree of accuracy for creating the two-dimensional object and the accuracy for positioning by pasting becomes high, and further the size of the two-dimensional object being invariable reduces the flexibility of the system. In the latter case, there arises a problem that the projected area on the blackboard becomes extremely small or extremely large making it inconvenient.

The main object of the present invention is to solve the above problems and to provide a touch input display system capable of handling a projected content while maintaining the usability of the system as it is even when two-dimensional objects of various sizes are pasted to arbitrary positions on the blackboard by managing the coordinate system of the two-dimensional object in addition to the coordinate system of the projection and input.

SUMMARY OF THE INVENTION

In order to achieve the above objective, the present invention associates a coordinate system of electronic data to be projected and a coordinate system of a two-dimensional object being similar to electronic data that is pasted, printed and the like on a touch panel to which this electronic data is to be projected by an alignment instruction to this touch panel from a user, specifies the position of the electronic data that corresponds to the position indicated to this touch panel, and specifies the related data associated to the specified position. Outputting the related data is also an aspect of the present invention. Additionally, outputting this output to an output device different from the projector, and this output device performing display and the like is also an aspect of the present invention. Further, using a display with a touch panel function, having functions of a touch panel and a projector integrated, is also an aspect of the present invention.

The present invention relates to a touch input display system by aligning the position of projected contents that are data of a personal computer and the like projected by such as a projector, with projected contents positioned on a touch input means such as a touch panel, and touching the projected contents with a finger or the like to operate the projected contents. Specifically, the present invention, in addition to aligning the projected contents with the touch input means, can manage three coordinate systems of the touch input means, the projected means and a two-dimensional object in an integrated manner in a system that aligns the position of two-dimensional objects such as pictures.

According to the present invention, by managing the coordinate system of two-dimensional objects in addition to the coordinate systems of the projection means and touch input means, information relating to touch positions can be displayed while maintaining the usability of the touch input system as it is even when two-dimensional objects of various sizes are pasted at various positions of the blackboard.

BRIEF DESCRIPTION OF THE DRAWINGS

For a more complete understanding of the present invention and the advantages thereof, reference is now made to the following description taken in conjunction with the accompanying drawings wherein:

Fig. 1 is a system configuration diagram of an embodiment of the present invention;
Fig. 2 is a flowchart for specifying and recording the coordinate transformation information in an embodiment of the present invention;
Fig. 3 is a diagram showing data configuration relating to records of scaling up/down, movement, and transformation amounts of the picture portion in an embodiment of the present invention;
Fig. 4 is a diagram showing data configuration relating to record of displacement amount between an actual picture and the touch panel coordinates in an embodiment of the present invention;
Fig. 5 is a flowchart for displaying picture information as related data using coordinate transformation information in an embodiment of the present invention;
Fig. 6 is a diagram explaining data contents relating to transformation of touch panel coordinates to initial coordinates of the projected picture portion in an embodiment of the present invention, and
Fig. 7 is a diagram showing a data structure relating to transformation of the initial coordinates of the projected picture portion to a corresponding picture information ID.

DESCRIPTION OF THE PREFERRED EMBODIMENTS

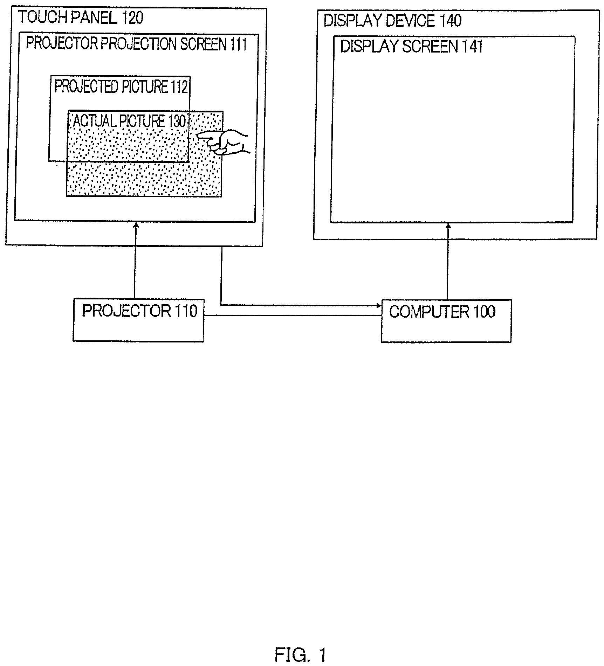

Fig. 1 illustrates a system configuration of an embodiment of the present invention which is configured to include a computer 100, a projector 110 that projects images in the computer, a display device 140 for displaying, a touch panel 120 that transmits to the computer 100 a touch by a finger or the like, and an actual picture 130. An image 112 of the picture is displayed on the projection screen 111 of the projector 110 and is projected on the touch panel. Picture information is displayed on the display screen 141 of the display device 140. Also, the actual picture 130 is set or fixed on the touch panel. Although an actual picture is used here, it is more practical that so-called replicas or printed matters are used instead. Further, this actual picture or the like can be set in any way such as by fixing with the use of a magnet, adhesives, or mechanically with such as screws.

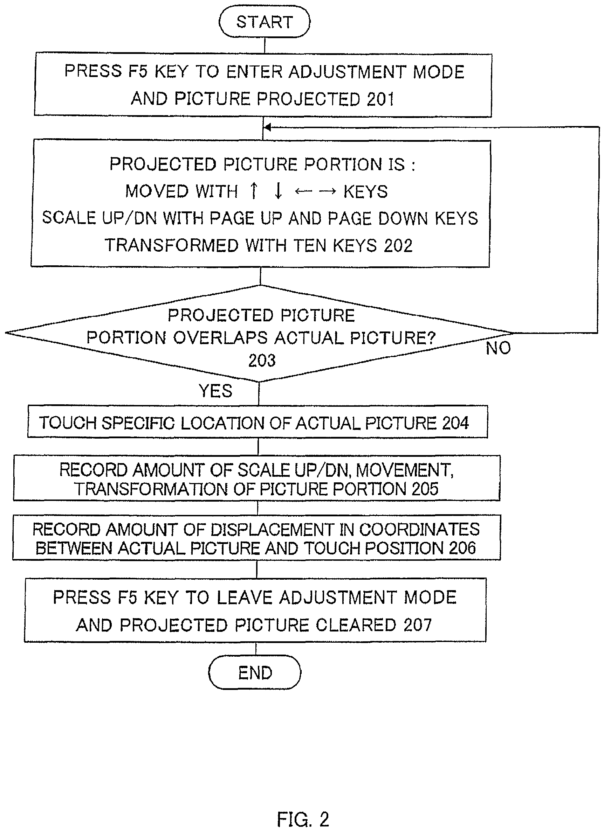

Fig. 2 illustrates a flowchart for specifying and recording coordinate transformation information for displaying picture information on the display device 140 by touching the actual picture 130. Details will follow. Note that, the present processing is performed by the computer 100 executing a program with its arithmetic unit similar to a central processing unit.

First, a specific operation is performed by, for example, pressing a predetermined key such as the F5 key or the like to enter the adjustment mode (201). Here, a picture is projected for adjustment.

The projected picture portion 112 is moved using the up arrow, down arrow, left arrow, and/or right arrow keys, scaled up/down using the Pageup/Pagedown keys, and transformed using the ten keys (202). Thereby, the user repeats moving, scaling up/down and transforming until the projected picture portion and the actual picture match (203). Adjustment is made in the following way. First, the contour of the projected picture is adjusted so that it becomes the same as the actual picture by moving and scaling up/down. At this time, due to the accuracy of size and setting of the actual picture as well as the accuracy of setting and adjustment of the projector, perfectly overlapping the projected picture over the actual picture is difficult. Therefore, fine adjustments of the length and breadth of the pictures are separately made by transformation for perfect overlapping.

Next, a touch by the user to a specific position of the actual picture is received (204). When receiving the touch at 204, the amount of scaling up/down, movement, and transformation of the picture portion is recorded (205). Additionally, the amount of displacement between the actual picture coordinates and touch coordinates is recorded in coordinates (206). These are for detecting the operation results at 202 and recording them.

Then the adjustment mode is terminated by pressing a specific key such as the F5 key. The key (F5) same as that used for starting was used here, but can be a different operation. And in this case, the projected picture may be cleared, in other words, projection may be terminated (207).

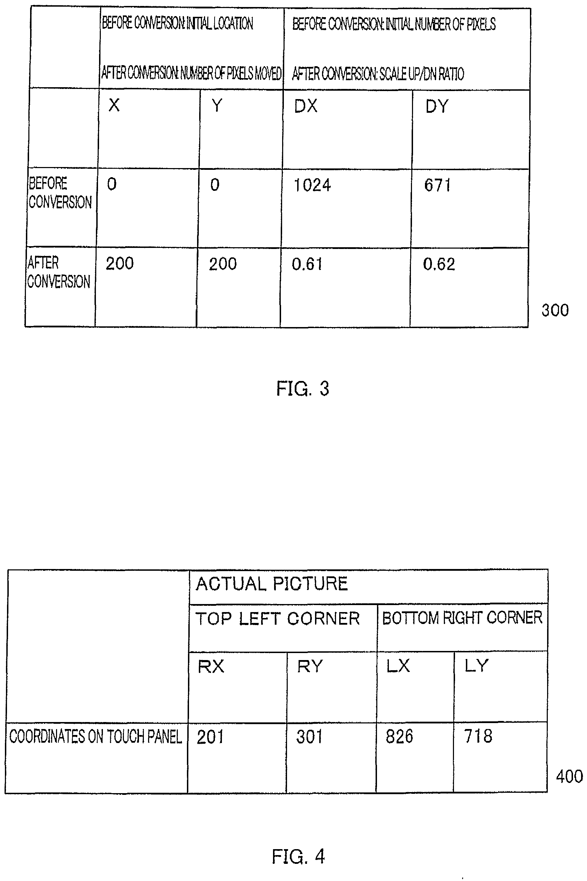

Fig. 3 is a diagram showing the data configuration 300 relating to recording the amount of scaling up/down, movement, and transformation of the picture portion 205. The program retains the position before transformation as X=0, Y=0 and the number of pixels as DX=1024, DY=671 as initial values. Note that, this position and number of pixels can take any value. When adjustments 202, 203 are performed, the number of pixels for movement as X=200, Y=200 and the scale up/down ratio as DX=0.61, DY=0.62 after transformation are obtained and recorded at the timing at which 204 is performed. Note that, the number of pixels for movement after transformation may be recorded in relative values in relation to that before transformation or may be recorded in an absolute coordinate system of such as the projection area. Also, the scaling up/down ratio after transformation may be recorded in number of pixels instead of in percentages.

Fig. 4 indicates the data configuration 400 relating to touching a specific position of the actual picture to record an amount of displacement in coordinates, between the coordinates of the actual picture and the touch panel 204. When adjustment 204 is performed, coordinates on the touch panel of RX=201, RY=301, LX=826, and LY=718 corresponding to the top left corner and the bottom right corner of the actual picture are recorded. Attention should be paid on the point that the coordinates of the touch panel can be obtained from the position of the picture portion when the coordinates of the projection area and that of the touch panel are the same. However, there are cases when the coordinates of the two are not the same due to the function or performance of the device driver of the touch panel. This data configuration 400 is essential for managing the differences between the two.

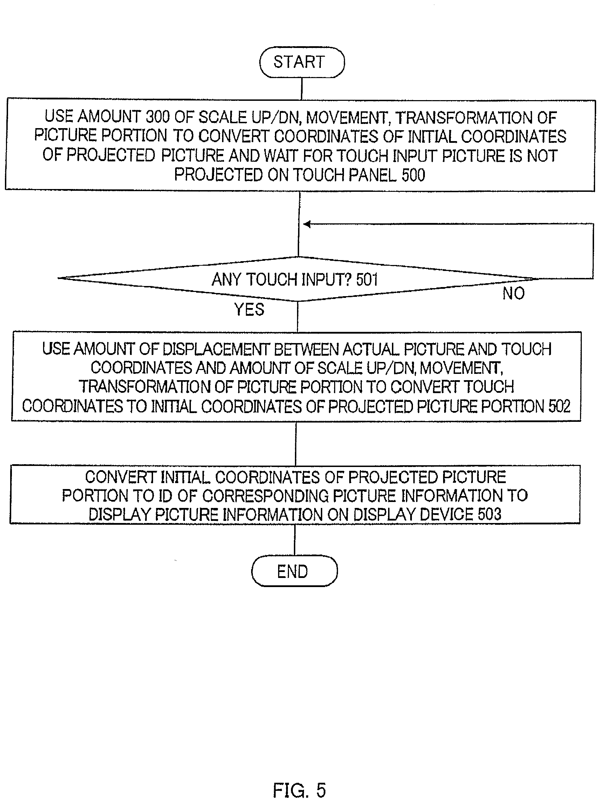

Fig. 5 illustrates a flowchart for displaying picture information on the display device using coordinate conversion information when touching the actual picture. Description thereto is as follows.

First, coordinate conversion is performed on the initial coordinates of the projected picture using amount of scaling up/down, movement, and transformation of the picture portion 300 (500). This processing is performed to wait for a touch input. The touch panel may or may not have a picture projected thereon (500). Note that, the coordinate conversion may be performed at the end of the flowchart illustrated in Fig. 2.

A touch input is detected (501) and when a touch input is performed or detected, the next operation follows. First, the touch coordinate is converted to the initial coordinate of the projected picture portion using the amount of displacement between the actual picture and the touch coordinates, and the amounts of scaling up/down, movement, and transformation of the picture portion (502). Next, based on the initial coordinate of the projected picture portion, picture information converted to an ID of corresponding picture information is displayed on the display device (503).

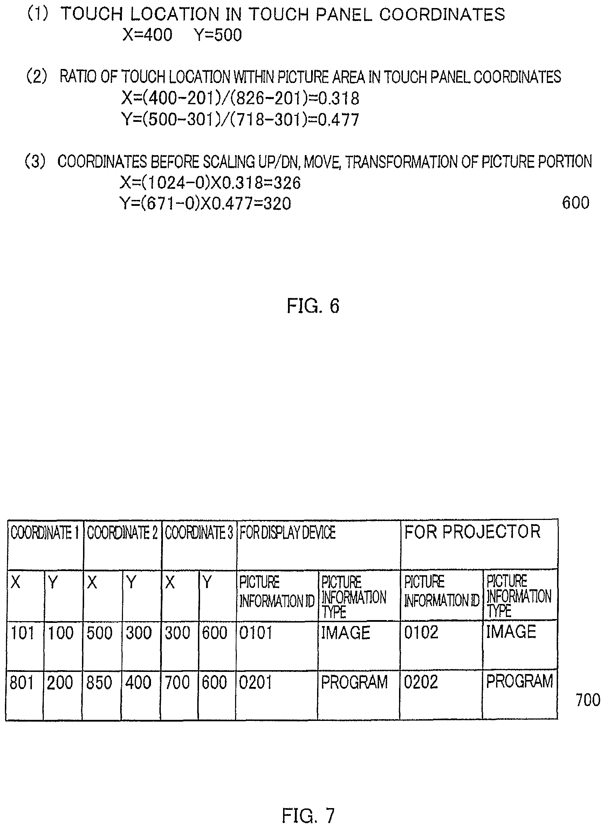

Fig. 6 indicates contents of data converted from the touch panel coordinates to the initial coordinates of the projected picture portion. The touch panel coordinates of X=400, Y=500 are obtained by touching the actual picture. First, the proportion of the touch position in the picture area in touch panel coordinates is obtained using the data configuration shown in Fig. 4. Specifically, X=(400-201)/(826-201)=0.318, Y=(500-301)/(718-301)=0.477 are obtained.
Next, the initial coordinate of the projected picture before scaling up/down, movement, and transformation of the picture portion is obtained using the data configuration shown in Fig. 3. Specifically, X=(1024-0)×0.318=326, Y=(671-0)×0.477=320 are obtained.

Fig. 7 indicates data configuration related to converting the initial coordinate of the projected picture portion to an ID of corresponding picture information 503. In a case the initial coordinate of the projected picture portion exists in a range obtained by connecting coordinate 1 and coordinate 3, information corresponding to the picture information ID is displayed for the display device 140 and the projector 110 by methods corresponding to the picture information. In the example, the initial coordinates of the projected picture is X=326, Y=320 so that picture information ID for the display device = 0101 is hit, meaning that picture information type = image, and the image is displayed. Further, picture information ID for the projector = 102 is hit, meaning that picture information type = image, and displays the image. Specifically, the image used for display on the projector, after conversion using the amount of scaling up/down, movement, and transformation of the picture portion in Fig. 3, is displayed at a specified position. In other words, the number of pixels is converted as given in the following formulas;

$$DX=1024 \times 0.61=625$$

$$DY=671 \times 0.62=417$$

displaying the upper left corner of the picture at the position of X=200, Y=200.

Although described in line with embodiments of the present invention with reference to the drawings, the present invention is not limited to the embodiments. It should be understood that any change and modification example and equivalent thereof may be made in the present invention without departing from the spirit and scope thereof.

**Claims**

1. A data display system that specifies, using a data display method, related data according to a specification to displayed electronic data, the data display system comprising:

   a projection device that projects the electronic data;
   a touch panel that receives a position input from a user, and to which a two-dimensional object corresponding to the electronic data is set; and
   a computer that is coupled to the projection device and the touch panel;
   wherein the projection device projects the electronic data on the touch panel,
   the computer receives an alignment instruction for the two-dimensional object from the user, and associates a coordinate system of the projected electronic data with the coordinate system of the touch panel and the coordinate system of the two-dimensional object in accordance with the received instruction, and specifies a position of the two-dimensional object in accordance with an input from the user to the touch panel, to specify related data stored in the computer in association with a position of the specified two-dimensional object.

2. The data display system according to claim 1, wherein a position and a scale when a part of the related data is projected as the electronic data are specified.

3. The data display system according to claim 1, wherein the related data is output.

4. The data display system according to claim 3, wherein the data display system further includes a display screen coupled to the computer and displays the related data as an output on the display screen.

5. A data display method that uses a data display system that specifies related data according to a specification to displayed electronic data, the data display system including

   a projection device that projects the electronic data,
   a touch panel that receives a position input from a user, and to which a two-dimensional object corresponding to the electronic data is set, and
   a computer that is coupled to the projection device and the touch panel;

   the data display method comprising:

   the projection device projecting the electronic data on the touch panel,
   the computer receiving an alignment instruction for the two-dimensional object from the user, and associating a coordinate system of the projected electronic data with the coordinate system of the touch panel and the coordinate system of the two-dimensional object in accordance with the received instruction, and
   specifying a position of the two-dimensional object in accordance with an input from the user to the touch panel, to specify a related data stored in the computer in association with a position of the specified two-dimensional object.

6. The data display method according to claim 5 including specifying a position and a scale when a part of the related data is projected as the electronic data.

7. The data display method according to claim 5 including outputting the related data.

8. The data display method according to claim 7, wherein the data display system further includes a display screen coupled to the computer and displays the related data as an output on the display screen.

FIG. 1

START

PRESS F5 KEY TO ENTER ADJUSTMENT MODE
AND PICTURE PROJECTED 201

PROJECTED PICTURE PORTION IS :
MOVED WITH ↑ ↓ ← → KEYS
SCALE UP/DN WITH PAGE UP AND PAGE DOWN KEYS
TRANSFORMED WITH TEN KEYS 202

PROJECTED PICTURE
PORTION OVERLAPS ACTUAL PICTURE?
203

NO

YES

TOUCH SPECIFIC LOCATION OF ACTUAL PICTURE 204

RECORD AMOUNT OF SCALE UP/DN, MOVEMENT,
TRANSFORMATION OF PICTURE PORTION 205

RECORD AMOUNT OF DISPLACEMENT IN COORDINATES
BETWEEN ACTUAL PICTURE AND TOUCH POSITION 206

PRESS F5 KEY TO LEAVE ADJUSTMENT MODE
AND PROJECTED PICTURE CLEARED 207

END

FIG. 2

| | BEFORE CONVERSION: INITIAL LOCATION<br><br>AFTER CONVERSION: NUMBER OF PIXELS MOVED | | BEFORE CONVERSION: INITIAL NUMBER OF PIXELS<br><br>AFTER CONVERSION: SCALE UP/DN RATIO | |
|---|---|---|---|---|
| | X | Y | DX | DY |
| BEFORE CONVERSION | 0 | 0 | 1024 | 671 |
| AFTER CONVERSION | 200 | 200 | 0.61 | 0.62 |

300

FIG. 3

| | ACTUAL PICTURE | | | |
|---|---|---|---|---|
| | TOP LEFT CORNER | | BOTTOM RIGHT CORNER | |
| | RX | RY | LX | LY |
| COORDINATES ON TOUCH PANEL | 201 | 301 | 826 | 718 |

400

FIG. 4

START

USE AMOUNT 300 OF SCALE UP/DN, MOVEMENT, TRANSFORMATION OF PICTURE PORTION TO CONVERT COORDINATES OF INITIAL COORDINATES OF PROJECTED PICTURE AND WAIT FOR TOUCH INPUT PICTURE IS NOT PROJECTED ON TOUCH PANEL 500

ANY TOUCH INPUT? 501

YES

NO

USE AMOUNT OF DISPLACEMENT BETWEEN ACTUAL PICTURE AND TOUCH COORDINATES AND AMOUNT OF SCALE UP/DN, MOVEMENT, TRANSFORMATION OF PICTURE PORTION TO CONVERT TOUCH COORDINATES TO INITIAL COORDINATES OF PROJECTED PICTURE PORTION 502

CONVERT INITIAL COORDINATES OF PROJECTED PICTURE PORTION TO ID OF CORRESPONDING PICTURE INFORMATION TO DISPLAY PICTURE INFORMATION ON DISPLAY DEVICE 503

END

FIG. 5

(1) TOUCH LOCATION IN TOUCH PANEL COORDINATES
X=400   Y=500

(2) RATIO OF TOUCH LOCATION WITHIN PICTURE AREA IN TOUCH PANEL COORDINATES
X=(400-201)/(826-201)=0.318
Y=(500-301)/(718-301)=0.477

(3) COORDINATES BEFORE SCALING UP/DN, MOVE, TRANSFORMATION OF PICTURE PORTION
X=(1024-0)X0.318=326
Y=(671-0)X0.477=320                                          600

FIG. 6

| COORDINATE 1 | | COORDINATE 2 | | COORDINATE 3 | | FOR DISPLAY DEVICE | | FOR PROJECTOR | |
|---|---|---|---|---|---|---|---|---|---|
| X | Y | X | Y | X | Y | PICTURE INFORMATION ID | PICTURE INFORMATION TYPE | PICTURE INFORMATION ID | PICTURE INFORMATION TYPE |
| 101 | 100 | 500 | 300 | 300 | 600 | 0101 | IMAGE | 0102 | IMAGE |
| 801 | 200 | 850 | 400 | 700 | 600 | 0201 | PROGRAM | 0202 | PROGRAM |

700

FIG. 7

Europäisches
Patentamt

European
Patent Office

Office européen
des brevets

# EUROPEAN SEARCH REPORT

**Application Number**

EP 12 15 4180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/263488 A1 (MARTIN DAVID A [CA]) 30 December 2004 (2004-12-30) * abstract; figure 1 * * paragraph [0040] - paragraph [0044] * * paragraph [0076] - paragraph [0080] * ----- | 1-8 | INV. G03B21/00 G06F3/14 G09G3/00 |
| X | US 2008/303794 A1 (BOLT STEPHEN [CA] ET AL) 11 December 2008 (2008-12-11) * abstract; figures 1-3 * * paragraph [0002] - paragraph [0005] * * paragraph [0030] - paragraph [0040] * * paragraph [0046] - paragraph [0049] * * paragraph [0053] - paragraph [0056] * ----- | 1,3-5,7, 8 | |
| X | EP 1 607 853 A2 (MICROSOFT CORP [US]) 21 December 2005 (2005-12-21) * paragraph [0002] - paragraph [0003] * * paragraph [0018] - paragraph [0051] * ----- | 1-8 | |
| X | US 2008/049044 A1 (NITTA TAKASHI [JP]) 28 February 2008 (2008-02-28) * abstract; figure 1 * * paragraph [0100] - paragraph [0131] * ----- | 1-8 | TECHNICAL FIELDS SEARCHED (IPC) G03B G06F G09G |

The present search report has been drawn up for all claims

| Place of search | Date of completion of the search | Examiner |
|---|---|---|
| Munich | 21 June 2012 | Njibamum, David |

EPO FORM 1503 03.82 (P04C01)

**ANNEX TO THE EUROPEAN SEARCH REPORT
ON EUROPEAN PATENT APPLICATION NO.**  EP 12 15 4180

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2012

| Patent document cited in search report | | Publication date | Patent family member(s) | | Publication date |
|---|---|---|---|---|---|
| US 2004263488 | A1 | 30-12-2004 | NONE | | |
| US 2008303794 | A1 | 11-12-2008 | CN | 101321251 A | 10-12-2008 |
| | | | US | 2008303794 A1 | 11-12-2008 |
| EP 1607853 | A2 | 21-12-2005 | EP | 1607853 A2 | 21-12-2005 |
| | | | JP | 2006092516 A | 06-04-2006 |
| | | | JP | 2012033183 A | 16-02-2012 |
| | | | US | 2006007170 A1 | 12-01-2006 |
| | | | US | 2009002344 A1 | 01-01-2009 |
| US 2008049044 | A1 | 28-02-2008 | JP | 2008026879 A | 07-02-2008 |
| | | | US | 2008049044 A1 | 28-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011052337 A
- JP 2003167880 A